# EUROPEAN PATENT SPECIFICATION

(11) **EP 1 571 075 B1**
(45) Date of publication and mention of the grant of the patent: **19.12.2007**
(21) Application number: 04425151.0
(22) Date of filing: 05.03.2004
(51) Int. Cl.: B62M 3/00, B62K 19/16

(54) **Insert for a bicycle pedal crank**
Einsatz für Fahrradtretkurbel
Insert pour manivelle de bicyclette

(43) Date of publication of application: 07.09.2005
(73) Proprietor: CAMPAGNOLO S.R.L., I-36100 Vicenza (IT)
(72) Inventor: Feltrin, Mauri, 36024 Nanto (Vicenza) (IT); Dettori, Paolo, 36100 Vicenza (IT)
(74) Representative: Checcacci, Giorgio

(56) References cited:
- EP-A- 1 270 394
- FR-A- 2 605 968
- US-A- 5 435 869
- US-A- 5 624 519
- PATENT ABSTRACTS OF JAPAN vol. 1995, no. 02, 31 March 1995 (1995-03-31) -& JP 06 321167 A (MITSUBISHI RAYON CO LTD), 22 November 1994 (1994-11-22)

## Description

The present invention refers to an insert for a bicycle pedal crank and to a method suitable for making such an insert.

The invention also refers to a pedal crank incorporating such an insert and to a method for obtaining it.

Different types of pedal cranks are known with different shapes, materials and constructive techniques aimed at achieving the objective of reducing the weight as much as possible and at the same time ensuring, if not even improving, the characteristics of resistance and reliability of pedal cranks.

The tendency towards making lighter pedal cranks has led to the use of composite materials, having a specific weight lower than the specific weight of conventional metal pedal cranks.

Remaining nevertheless unaltered the specific pressures that come into play in the use of pedal cranks in composite material, in the case in point the torsion forces between the chain and the toothed crowns and the torsion forces on the pedal and on the bottom bracket due to the driving action of the cyclist as he/she pedals, it is necessary to ensure an adequate mechanical resistance of the interface zones between the body of the pedal cranks in composite material and the attachment zones to the toothed crowns, the attachment zone to the bottom bracket and the attachment zone to the pin of the pedal, respectively.

To reinforce such interface zones metallic inserts are used. Such pedal cranks are made by moulding of a thermo-setting composite material inside a mould where such metallic inserts are arranged.

The composite material in plastic state is arranged to cover the inserts, surrounding them for a large part of their outer surface. The material thus arranged inside the mould is heated and simultaneously subjected to a suitable pressure until it is reticulated. The pedal crank then undergoes a cooling until it reaches room temperature.

During the cooling step due to the different cooling coefficient, there is the drawback that the composite material that surrounds the metallic insert tends to detach from the walls of the insert itself. During cooling, indeed, the metallic material of which the insert consists shrinks more than the composite material of the pedal crank body and the degree of detachment is all the greater the greater the difference of the cooling coefficient of the two materials. Such a detachment involves a decrease in adherence between the metal insert and the composite material, with a consequent decrease in the properties of resistance and hold of the interface zones.

The purpose of the present invention is that of overcoming said drawback.

FR-A-2605968 discloses a pedal crank with an insert according to the preamble of claim 1.

A first purpose of the invention is that of making an insert for a pedal crank that does not detach and at the same time that ensures sufficient resistance for the interface zones in which it is arranged.

Indeed, studies and research by the Applicant have demonstrated that by giving them a particular structure it is possible to make inserts in composite material.

Another purpose of the invention is to make an insert for a pedal crank that gives the pedal crank itself a lower weight with respect to known pedal cranks with metallic inserts.

A first aspect of the invention lies in an insert for a bicycle pedal crank having a connection portion for connecting to a component of the bicycle and a fastening portion for attachment to the body of the pedal crank, and characterised by being made with unidirectional structural fibres incorporated in a polymeric material, said unidirectional fibres being arranged such that they extend in at least two distinct directions.

Advantageously the unidirectional structural fibres coupled according to many directions give the insert a high mechanical rigidity and allow its direct connection to the bicycle parts.

In a preferred embodiment, the insert is made by piling up many sheets of unidirectional fibres in which each sheet consists of unidirectional fibres woven together to make a typical fabric structure with warp and weft.

Again in a preferred embodiment, the insert has a substantially elongated shape along a main axis, in which the fastening portion is contiguous to the connection portion along such an axis. Preferably, the length of the connection portion is slightly greater than the length of the fastening portion.

In a second preferred embodiment, the insert has a substantially tubular shape in which the connection portion is defined on the inner surface of the tubular body and the fastening portion is defined on the outer surface of the tubular body.

Preferably, the insert of the invention has, in the connection portion, a through hole, possibly threaded, to allow the connection to the parts of the bicycle, like for example the toothed crowns, the pin of the pedal or the pin of the bottom bracket.

A second aspect of the invention lies in a method for making an insert as above defined, characterised in that it comprises the steps of:
- providing a mould;
- providing said unidirectional structural fibres incorporated in a polymeric material in sheets;
- providing, in said mould, a plurality of sheets piled up so that the unidirectional structural fibres are orientated according to at least two distinct directions;
- subjecting the mould to a pressure and temperature profile such as to cause the setting of the polymeric material;
- removing the insert from said mould.

In a preferred embodiment of the method, a further step of making a through hole in the connection zone of the insert is provided.

Another aspect of the invention lies in a bicycle pedal crank, characterised in that it comprises a main body at least partially consisting of a composite material consisting of structural fibres incorporated in a polymeric material and in that it comprises one or more of the aforementioned inserts.

In a preferred embodiment, the main body of the pedal crank consists entirely of the composite material consisting of structural fibres incorporated in a polymeric material.

Preferably the polymeric material of which the composite material of the body of the pedal crank consists is substantially the same as the polymeric material that incorporates the unidirectional fibres of which the inserts consist.

Even more preferably, the inserts are inserted in the attachment zones of the pedal crank to the toothed crowns, in the attachment zone to the bottom bracket and in the attachment zone to the pin of the pedal so as to make a pedal crank completely in composite material.

A further aspect of the invention lies in a method for making a pedal crank comprising a main body at least partially consisting of a composite material consisting of structural fibres incorporated in a polymeric material, characterised in that it comprises the steps of:
- providing a mould shaped according to the desired outer profile of the pedal crank;
- providing, in at least one predetermined zone of said mould, at least one insert formed from unidirectional structural fibres incorporated in a polymeric material, said unidirectional fibres being arranged such that they extend in at least two distinct directions, and having a fastening portion and a connection portion;
- providing said composite material in the mould;
- subjecting said composite material to a temperature and pressure profile such as to allow it to be arranged in contact with the fastening portion of said at least one insert and such as to cause the setting of the polymeric material;
- removing the pedal crank from the mould.

Moreover, the choice of polymeric materials that are substantially the same for the composite material of the body of the pedal crank and for the sheets of unidirectional fibres of the inserts, allows an ideal fastening and therefore a high adherence between the body of the pedal crank and the inserts to be obtained.

Preferably, the through hole in the connection zone of the insert is made after the pedal crank is removed from the mould, to allow the exact centring of the hole itself with respect to the bicycle part intended to be connected to the pedal crank, in particular during the assembly step of the toothed crowns to the pedal crank.

Further characteristics and advantages of the invention shall become clearer from the description of preferred embodiments, made with reference to the attached drawings, where:
- fig. 1 represents, in an axonometric view, the insert of the invention;
- fig. 2 represents, in an axonometric view, an intermediate product for obtaining the insert of the invention of fig. 1;
- fig. 3 represents a section plan view of a first variant embodiment of the insert of fig. 1;
- fig. 4 represents a cross section along the axis III°-III° of the insert of fig. 3;
- fig. 5 represents, in an axonometric view, another variant embodiment of the insert of the invention;
- fig. 6 represents, in an axonometric view, a further variant embodiment of the insert of the invention;
- fig. 7 represents a partially sectioned plan view of a pedal crank according to the invention;
- fig. 8 represents a partial section view along the axis VII°-VII° of the pedal crank of fig. 7;
- fig. 9 represents a partial section view along the axis VIII°-VIII° of the pedal crank of fig. 7;
- fig. 10 represents an exploded axonometric view of another embodiment of a pedal crank according to the invention.

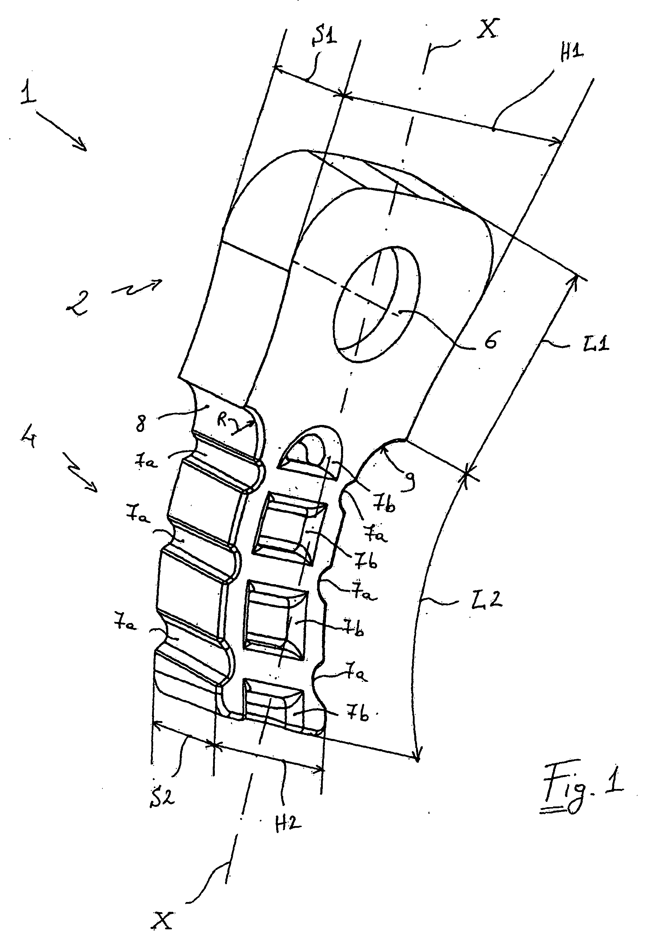

The insert of the invention is represented in fig. 1 and is wholly indicated with 1.

The insert 1 has an elongated slightly arched shape and extends along the main axis X-X. It essentially consists of a connection portion 2 and a fastening portion 4 that extend contiguously along the main axis X-X.

The fastening portion 4 of the insert 1, has, in its outer surface, a plurality of depression zones 7a, 7b. More specifically, first depression zones 7a extend on the outer peripheral surface of the fastening portion 4 for all of its thickness S2 and consist of substantially cylindrical surfaces. Second depression zones 7b engage the interfacing surfaces 4a and 4b of the fastening portion 4 and consist of cuts that partially engage the thickness S2 of the fastening portion 4 itself. In different embodiments, such depressions 7b could, nevertheless, engage the fastening portion 4 for all of its thickness S2, substantially making through holes.

The connection portion 2 has a through hole 6.

The fastening portion 4 has a length L2 slightly greater than the length L1 of the first portion 2, whereas its width H2 is less than the width H1 of the first portion. The thicknesses S1 and S2 of the connection and fastening portions 2 and 4, on the other hand, are substantially the same.

The connection and fastening portions 2 and 4 are connected through two surfaces 8 and 9 having a circular profile of radius R. The curvilinear progression of such surfaces allows the tensions to which the insert 1 is subjected in the transition zone between the connection and fastening portions 2 and 4 to be uniformly distributed. The value of the radius R is suitably chosen, in the design phase, based upon the force components to which the insert 1 is subjected.

The insert 1 is made through the piling up of many sheets of unidirectional structural fibres incorporated in a polymeric material coupled together according to two distinct directions.

In a first embodiment, the unidirectional structural fibres are orientated according to two perpendicular directions and are woven together to define the weft and the warp of a sheet of fabric, commonly known as plain fabric. The insert 1 is thus obtained through the piling up of a number of sheets of fabric in a sufficient number to reach the desired thickness S1 (S2).

The sheets of fabric used typically have a thickness of between 0.3 and 0.5 mm whereas the thickness S1 (S2) of the insert 1 is in the order of 5 mm, for which reason between 10 and 17 sheets of fabric are used.

The fabric obtained from the weaving of unidirectional fibres of warp and weft can have, in different embodiments, any known weave, like for example a "twill" or "satin" fabric.

Preferably, but not necessarily, the weft fibres are present in the fabric with the same percentage by weight of the warp fibres.

In a second preferred embodiment, the unidirectional structural fibres are incorporated in distinct sheets, each containing fibres orientated in a single direction. The insert 1 is obtained by piling up a plurality of such sheets, arranging them so that the directions of the unidirectional fibres that they incorporate do not all coincide. In a preferred way, the sheets of unidirectional fibres are piled up so that the unidirectional fibres are aligned according to two directions perpendicular to each other. In other cases, the sheets of unidirectional fibres are piled up and angularly staggered according to many directions, so as to define a substantially isotropic structure with unidirectional structural fibres distributed on many directions.

In further embodiments, it can be provided that the insert 1 is made by piling up many sheets of the type described above according to any combination, like for example sheets of fabric alternated by sheets of just unidirectional fibres angularly staggered from each other.

Typically, the unidirectional structural fibres are chosen from the group consisting of carbon fibres, glass fibres, aramidic fibres, ceramic fibres, boron fibres and combinations thereof, carbon fibre being preferred.

The polymeric material can consist of a thermo-setting plastic material or a thermoplastic material, with different known treatment processes according to the chosen material, as we shall see later on.

In fig. 2 a variant embodiment of the insert 20 is represented that differs from the embodiment described previously in that it does not have the through hole 6 in the connection portion 2.

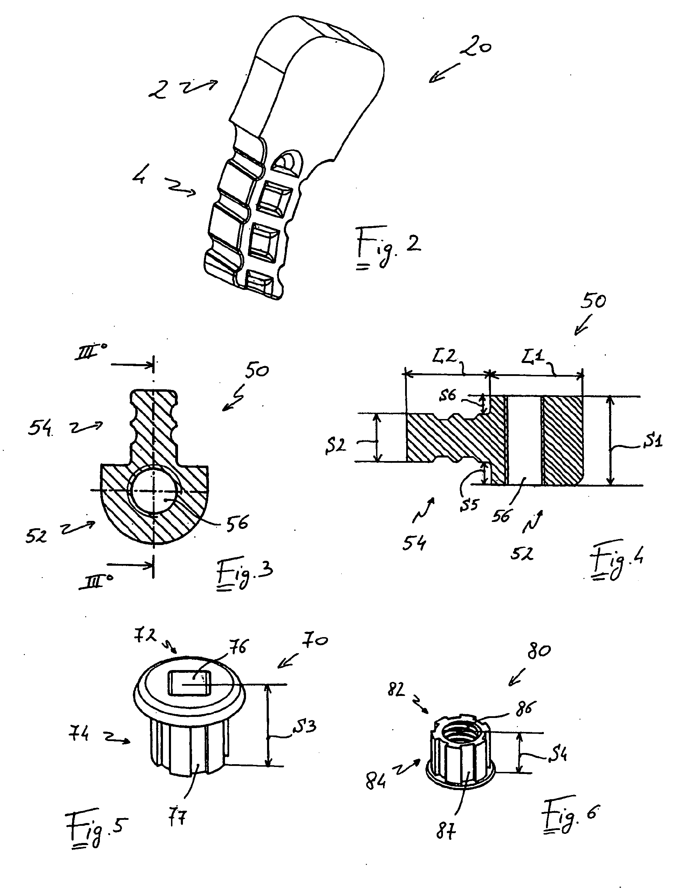

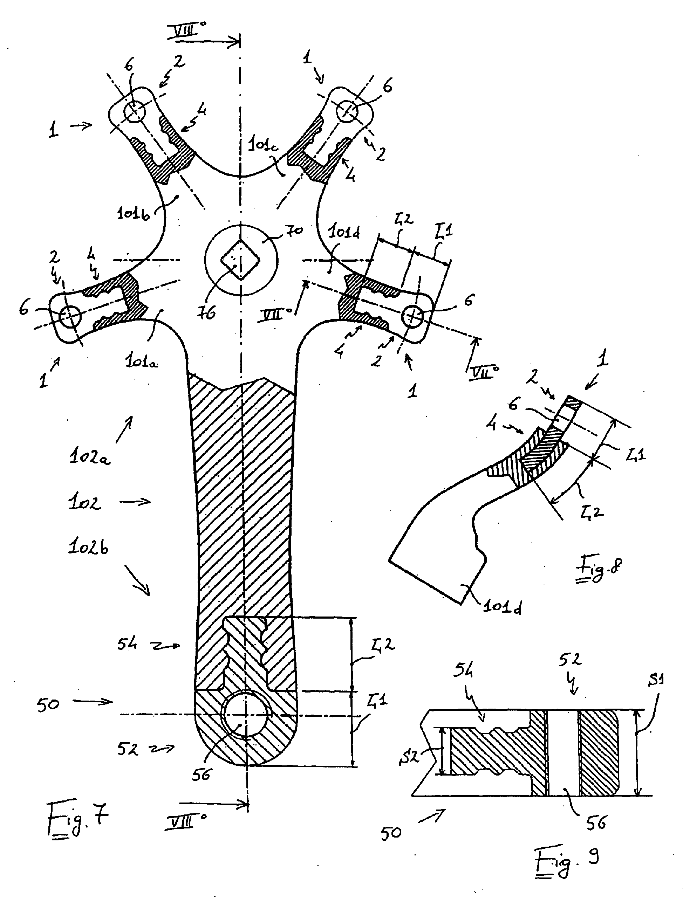

In figs. 3 and 4 a variant embodiment of the insert is represented, indicated with 50. The insert 50 differs from the insert described with reference to fig. 1 in that it has the connection portion 52 with a thickness S1 greater than the thickness S2 of the fastening portion 54 and, moreover, the hole 56 in the connection portion 52 is threaded.

The thickness S1 of the insert 50 is in the order of 14 mm, whereas the thickness S2 is about half the thickness S4, i.e. about 7 mm. The sheets of fabric used, as stated, typically have a thickness of between 0.3 and 0.5 mm, for which reason to obtain the desired thicknesses S1 and S4 between 14 and 23 sheets of fabric for S3 and between 28 and 46 sheets of fabric for S4 are used, respectively.

In fig. 5 another variant embodiment of the insert is represented, indicated with 70.

The insert 70 has a substantially tubular shape in which a connection portion 72 and a fastening portion 74 are defined. The connection portion 72 consists of a square hole 76 formed on the inner surface of the tubular body, whereas the fastening portion 74 consists of depressions in the form of grooves 77 that extend on the outer surface of the tubular body for almost the entire thickness S3 of the insert 70, of about 22 mm.

In fig. 6 a further variant embodiment of the insert is represented, indicated with 80.

The insert 80 has a substantially tubular shape in which a connection portion 82 and a fastening portion 84 are defined. The connection portion 82 consists of a threaded hole 86 coinciding with the inner surface of the tubular body, whereas the fastening portion 84 consists of depressions 87 in the form of grooves that extend on the outer surface of the tubular body for almost the entire thickness S4 of the insert 80, of about 14 mm.

In a particularly preferred way, an insert 1, 20, of the type represented in figures 1 and 2 according to the present invention, is made with the method described hereafter.

In a first semi-mould shaped according to the outer profile of the insert 1, 20 a predetermined number of sheets of fabric are piled up so as to fill the mould for the desired thickness. Each sheet of fabric is formed of unidirectional structural fibres of carbon fibre, crossed according to two directions, of warp and weft, perpendicular to each other in a configuration commonly called "plain". The fabric is arranged in the mould so that one of the two warp and weft directions is substantially parallel to the main axis X-X of the insert 1, 20. The fibres in the sheets of fabric are impregnated with a thermo-setting resin. The mould is then closet through a second semi-mould that couples with the first semi-mould to internally define a chamber with a shape matching the outer shape of the insert 1, 20. The two semi-moulds are then subjected to a temperature and pressure profile such as to cause the cross-linkage of the thermo-setting resin giving the sheets of fabric the compact structure with the desired shape of insert. More specifically, the temperature of the thermo-setting resin is raised from a room temperature value, when the sheets of fabric are positioned in the mould and the resin possesses a degree of plasticity such as to allow the cascade of the sheets of fabric, up to its cross-linkage temperature, i.e. when it takes up a rigid structure. With cross-linkage complete, the insert is left to cool and is then removed from the mould.

The unidirectional fibres can also be incorporated in a thermoplastic resin. In this case the temperature and pressure profile firstly provides that the temperature of the thermoplastic resin be raised from a room temperature value, when the sheets of fabric are positioned in the mould and the resin is substantially rigid, up to its vitreous transition temperature. At such a temperature, the thermoplastic resin of the various sheets of fabric melts, giving a plastic consistency to the piled up sheets of fabric that take up, under pressure, the shape of the mould. Then follows a second cooling step of the mould during which the thermoplastic resin, cooling down, regains the desired rigidity. The mould is then opened and the insert is removed.

In the rest of the present description and in the subsequent claims, with the term "setting" we therefore mean the cross-linkage process, in the case in which the resin used is of the thermo-setting type, whereas we mean a melting followed by cooling in the case in which the resin used is of the thermoplastic type.

The steps of the method described up to here allow an insert 20 of the type shown in fig. 2 to be obtained, in other words the same element of fig. 1 with the exception of the fact that it does not have the hole 6. Preferably, indeed, the hole 6 on each insert 20, is made after it has been inserted in the pedal crank, as we shall see hereafter. Alternatively, the hole 6 can be made on the insert 20 obtained with the previous method through mechanical processing, for example milling, boring or through cutting with a high pressure beam of concentrated water incorporating abrasive particles.

Furthermore, alternatively, the hole 6 can be obtained directly during the previous moulding steps, taking care to suitably perforate the sheets of fabric before their insertion in the mould and thus before the thermal setting treatment of the thermo-setting or thermoplastic resin.

To make the insert 50 represented in fig. 4, the same method described above can be used, in which the filling step of the mould through the piling up of sheets of fabric firstly provides for arranging a predetermined number of sheets of fabric of length L1 for a thickness S5, then piling a predetermined number of sheets of fabric of length L1+L2 for a thickness S2 and finally piling up a predetermined number of sheets of fabric of length L1 for a thickness S6.

Alternatively, the aforementioned inserts 1, 20, 50, and their variations in thickness, can be obtained starting from a monolithic element, with a substantially parallelepiped shape, consisting of piled up sheets of fabric subjected to the previous moulding cycle with setting, on which subsequent mechanical removal operations are carried out to obtain the desired profiles.

In the case in which one wishes to make the inserts 70, 80 of figs. 5 and 6, the same method described previously can be used in which the respective through holes 72 and 82 are advantageously made after the removal from the mould of the set material through mechanical processing by milling, by boring or through cutting with a high pressure beam of concentrated water incorporating abrasive particles.

In a different embodiment of the described method, the sheets of can have a weave with a different configuration, like for example "twill", "satin" or other type weave, or else furthermore the fabric can have different percentages of weight between warp and weft.

In another preferred embodiment of the method, each sheet inserted in the mould consists of just unidirectional structural fibres and the desired thickness is obtained by alternately piling up a predetermined number of sheets according to perpendicular directions.

In a further preferred embodiment, each sheet inserted in the mould consists of just unidirectional structural fibres and the desired thickness is obtained by alternately piling up a predetermined number of sheets according to angularly staggered directions, so as to obtain a substantially isotropic structure with unidirectional fibres distributed homogeneously over 360°.

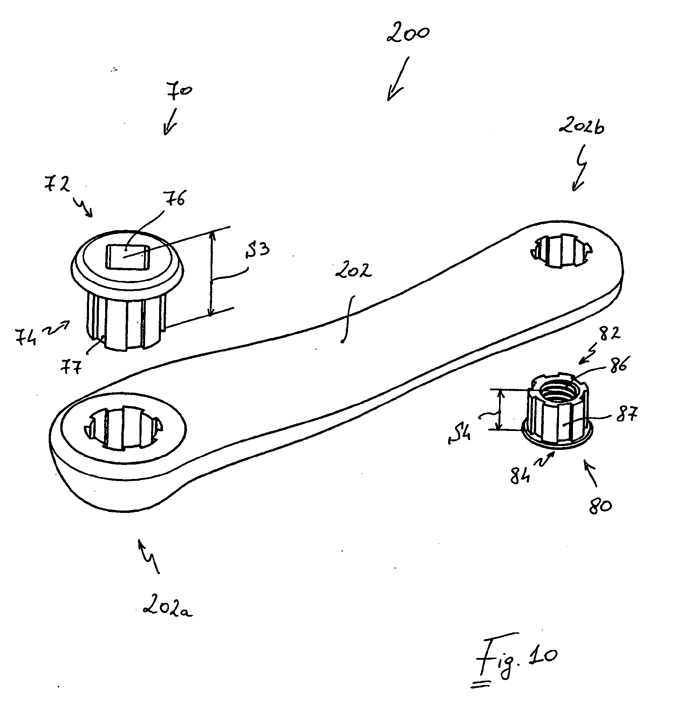

In fig. 7 a pedal crank with spokes 100 is represented, commonly known as right pedal crank, suitable for being connected to the bottom bracket of the bicycle, to the pedal and for receiving two or more toothed crowns in mechanical coupling. Such a type of pedal crank 100 substantially has a main body 102 having a first end 102a provided for the connection to the bottom bracket and for the connection of the toothed crowns, not represented, and a second end 102b provided to receive the pin of a pedal, also not represented.

In the first end 102a of the pedal crank 100, four spokes 101a-101d are made at the ends of which respective inserts 1 or 20 of the type represented in fig. 1 are inserted. The inserts 1 have the toothed crowns fixed to them, on which the chain is wound for the transmission of the movement from the pedal to the rear wheel. A known attachment method of the toothed crowns to the pedal crank with spokes 100 provides, for example, the use of attachment screws arranged passing into the holes 6 of the inserts 1 that lock the sprockets to the spokes 101a-101d through corresponding attachment nuts.

As can be seen in the detail of fig. 8, the fastening portion 4 of each insert 1 is totally enclosed by the material that constitutes the end of the corresponding spoke 101a-101d. In such a configuration, the material that constitutes the pedal crank 100 fills the depressions 7a and 7b of the fastening portion 4, with the consequent increase in contact surfaces and the increase in adherence between the body of the pedal crank and the insert 1. Moreover, the characteristics that the length L2 of the fastening portion 4 incorporated in the body of the pedal crank 100 is greater than the length L1 of the connection portion 2 projecting from the ends of the spokes 101a-101d, allows a high stability of the insert 1, and in particular a high rigidity to be obtained that counteracts possible flexing of the insert along its main axis X-X.

Again in the first end 102a, and in a central position, there is an insert 70 of the type represented in fig. 5 to the square hole of which 76 the pin of the bottom bracket is fixed in a known way. The fastening portion 74 of the insert 70, and in particular the grooves 77, are totally enclosed by the material that constitutes the body of the pedal crank 100 determining a high adherence between the body of the pedal crank 100 and the insert 70 itself.

In the second end 102b of the pedal crank 100 there is an insert 50 of the type shown in figs. 3 and 4, which allows the connection of a pedal receiving in engagement in the threaded hole 56 the threaded pin of the pedal, not represented. The thickness S1 of the connection portion 52, which is greater than the thickness S2 of the fastening portion 54, allows a smooth progression of the outer surface of the pedal crank 100 to be obtained, promoting the attachment of the pedal to the pedal crank 100 itself.

As observed in figs. 7 and 9, the fastening portion 54 of the insert 50 is totally enclosed by the material that constitutes the body of the pedal crank 100, determining a high adherence between the body of the pedal crank 100 and the insert 50 itself. Like for the inserts 1, the stability of the insert 50, and in particular the rigidity with respect to flexing along its main axis X-X, is obtained thanks to the fact that the length L2 of the fastening portion 54 incorporated in the body of the pedal crank 100 is greater than the length L1 of the connection portion 52 projecting from the end of the pedal crank 100.

In fig. 10 a pedal crank 200 is represented, commonly known as left pedal crank, consisting of a main body 202 having a first end 202a provided for the connection to the bottom bracket, not represented, and a second end 202b provided to receive the pin of a pedal, also not represented.

In the first end 202a there is an insert 70 of the type represented in fig. 5 to the square hole of which 76 the pin of the bottom bracket is fixed in a known way. The fastening portion 74 of the insert 70, and in particular the grooves 77, are totally enclosed by the material that constitutes the body of the pedal crank 200 determining a high adherence between the body of the pedal crank 200 and the insert 70 itself.

In the first end 202b there is an insert 80 of the type represented in fig. 6 to the square hole of which 86 the pin of the bottom bracket is fixed in a known way. The fastening portion 84 of the insert 80, and in particular the grooves 87, are totally enclosed by the material that constitutes the body of the pedal crank 200 determining a high adherence between the body of the pedal crank 200 and the insert 80 itself.

In both the described right and left pedal crank 100, 200, the main body 102, 202 advantageously consists of a composite material consisting of structural fibres incorporated in a polymeric material, the fibres of the composite material being able to be arranged in the polymeric material both in a disordered manner, for example in the form of small sheets or pieces of fibres arranged randomly, and in an ordered manner to form a typical fabric structure. The structural fibres, like for the insert, are chosen from the group consisting of carbon fibres, glass fibres, aramidic fibres, ceramic fibres, boron fibres and combinations thereof, carbon fibre being preferred. The polymeric material with which the composite of the pedal crank is made is advantageously chosen of the same type as the polymeric material used to make the inserts 1, 50, 70, 80, in the case in point a thermo-setting resin.

In different embodiments, the right or left pedal crank can provide for the use both of inserts of the type described and inserts of the conventional type made from aluminium or metallic material. For example, such a right pedal crank can have the inserts 1 for the attachment to the toothed crowns of the type described in the present invention, whereas the inserts for the attachment to the bottom bracket and to the pedal can be made from aluminium.

In further different embodiments, the body of the pedal crank can be not entirely made from composite material consisting of structural fibres incorporated in a polymeric material, but have parts of different material or recesses, like for example a hollow metallic core or a core of plastic material, according to that which is described in patent applications EP 1270393, EP 1270394 and EP 1281609 to the same Applicant, incorporated here for reference.

In a preferred manner, a right or left pedal crank 100, 200 of the type described above, is made with the method described hereafter.

In a first semi-mould shaped according to the desired outer profile of the pedal crank 100, 200, the inserts 1, 50, 70, 80 are positioned in the corresponding zones relative to the attachment of the toothed crowns, to the attachment to the bottom bracket and to the attachment to the pin of the pedal. Then the composite material that constitutes the body 102, 202 of the pedal crank 100, 200 is arranged in the mould. The mould is then closed through a second semi-mould that couples with the first semi-mould to internally define a chamber with a shape matching the outer shape of the pedal crank 100, 200. The composite material is then subjected to a pressure such as to allow it to be arranged to fill the mould and in particular to be arranged in contact with the fastening portion 4, 54, 74, 84 of the inserts 1, 50, 70, 80. The two semi-moulds are then subjected to a temperature profile such as to cause the setting of the polymeric material that constitutes the composite material of the pedal crank. In particular, if a polymeric material consisting of a thermo-setting resin is used, the temperature of the thermo-setting resin is raised, from a room temperature value, up to its cross-linkage temperature, i.e. when it takes up a rigid structure. The coupling between the composite material and the fastening portions 4, 54, 74, 84 of the inserts 1, 50, 70, 80 is thus made. With setting complete, the pedal crank 100, 200 is left to cool and is then removed from the mould.

If, on the other hand, the polymeric material of the composite material used is a thermoplastic resin, the temperature and pressure profile firstly provides that the temperature of the thermoplastic resin is raised, from a room temperature value, up to its vitreous transition temperature. At such a temperature the thermoplastic resin melts, giving a plastic consistency to the composite material that takes up, under pressure, the shape of the mould. Then follows a second cooling step of the mould during which the thermoplastic resin, cooling down, regains the desired rigidity. The mould is then opened and the pedal crank 100, 200 is removed.

In a preferred manner, instead of the inserts with the hole 6, 56, 76, 86 inserts without a through hole, of the type shown for example in fig. 2, can be positioned inside the mould, for which reason all of the necessary holes 6, 56, 76, 86 are made in a subsequent step after the removal of the pedal crank from the mould. Such a step advantageously allows the correct centring of such holes 6, 56, 76, 86 to be made and allows the correct assembly of the toothed crowns, of the pin of the pedal and the correct and aligned coupling of the pedal crank 100, 200 with the bottom bracket.

Preferably, as stated above, the polymeric material with which the body of the pedal crank 100, 200 is made is the same as the polymeric material used for making the inserts 1, 20, 50, 70, 80. In such a way, the thermal coefficients of the parts that are co-moulded, i.e. the body of the pedal crank 100, 200 and the inserts 1, 20, 50, 70, 80, are substantially the same and the coupling between the pedal crank and the inserts has maximum adhesion.

## Claims

1. Insert (1; 20; 50; 70; 80) for a bicycle pedal crank (100; 200) the insert having a connection portion (2; 52; 72; 82) for connecting to a component of the bicycle and a fastening portion (4; 54; 74; 84) for attachment to the body of the pedal crank (100; 200); **characterised by** being made with unidirectional structural fibres incorporated in a polymeric material, said unidirectional fibres being arranged such that they extend in at least two distinct directions.

2. Insert (1; 20; 50; 70; 80) according to claim 1, **characterised in that** said unidirectional fibres are incorporated in at least two distinct sheets, each containing fibres orientated in a single direction.

3. Insert (1; 20; 50; 70; 80) according to claim 1, **characterised in that** said unidirectional fibres are woven together and are incorporated in a single sheet of fabric.

4. Insert (1; 20; 50; 70; 80) according to claim 3, **characterised in that** said unidirectional fibres are orientated in two directions and constitute warp and weft of said sheet of fabric.

5. Insert (1; 20; 50; 70; 80) according to claim 2 or 3, **characterised in that** it comprises a plurality of piled up sheets.

6. Insert (1; 20; 50; 70; 80) according to claim 5, **characterised in that** said sheets are piled up staggered apart, so as to form a structure containing unidirectional structural fibres orientated in many directions.

7. Insert (1; 20; 50; 70; 80) according to claim 5, **characterised in that** said sheets are piled up in an ordered manner, so as to form a structure containing unidirectional structural fibres orientated substantially in just two directions.

8. Insert (1; 20; 50; 70; 80) according to claim 7, **characterised in that** said two directions substantially define a right angle.

9. Insert (1; 20; 50; 70; 80) according to claim 4, **characterised in that** said unidirectional structural fibres have the same percentage weight of warp and weft.

10. Insert (1; 20; 50; 70; 80) according to claim 1, **characterised in that** said unidirectional structural fibres are chosen from the group consisting of carbon fibres, glass fibres, aramidic fibres, boron fibres, ceramic fibres and combinations thereof.

11. Insert (1; 20; 50; 70; 80) according to claim 1, **characterised in that** said polymeric material is a thermo-setting resin.

12. Insert (1; 20; 50; 70; 80) according to claim 1, **characterised in that** said polymeric material is a thermoplastic resin.

13. Insert (1; 20; 50) according to claim 1, **characterised in that** it has a substantially elongated shape along a main axis (X-X) in which said connection portion (2; 52) is contiguous to said fastening portion (4; 54) along said main axis (X-X).

14. Insert (1; 20; 50) according to claim 13, **characterised in that** said fastening portion (4; 54) has a length (L2) greater than or equal to the length (L1) of said connection portion (2; 52).

15. Insert (1; 20) according to claim 13, **characterised in that** said fastening portion (4) has a thickness (S2) substantially the same as the thickness (S1) of said connection portion (2).

16. Insert (1; 20; 50) according to claim 13, **characterised in that** said fastening portion (4; 54) has a width (L2) smaller than the width (L1) of said connection portion (2; 52).

17. Insert (50) according to claim 13, **characterised in that** said fastening portion (54) has a thickness (S2) smaller than the thickness (S1) of said connection portion (52).

18. Insert (1; 20; 50) according to claim 16 or 17, **characterised in that** said connection portion (2; 52) and said fastening portion (4; 54) are connected through a surface (8, 9) with a circular profile.

19. Insert (70; 80) according to claim 1, **characterised in that** it has a body substantially tubular in shape, said connection portion (72; 82) being internally defined on said tubular body and said fastening portion (74; 84) being externally defined on said tubular body.

20. Insert (1; 20; 50; 70; 80) according to claim 1, **characterised in that** said fastening portion (4; 54; 74; 84) comprises, on the outer peripheral surface, one or more depression zones (7, 7a, 7b; 77; 87).

21. Insert (1; 20; 50; 70; 80) according to claim 20, **characterised in that** said depression zones (7a; 77; 87) extend for the entire thickness (S2; S3; S4) of said fastening portion (4; 54; 74; 84).

22. Insert (1; 20; 50; 70; 80) according to claim 1, **characterised in that** said fastening portion (4; 54; 74; 84) has through holes.

23. Insert (1; 20; 50; 70; 80) according to claim 22, **characterised in that** said through holes extend along the thickness (S2; S3; S4) of said fastening portion (4; 54; 74; 84).

24. Insert (1; 20; 50; 70; 80) according to claim 1, **characterised in that** said connection portion (2; 52; 72; 82) has at least one through hole (6; 56; 76; 86).

25. Insert (50; 80) according to claim 24, **characterised in that** said at least one through hole (56; 86) is threaded.

26. Pedal crank (100; 200) of a bicycle, **characterised in that** it comprises a main body (102; 202) at least partially consisting of a composite material consisting of structural fibres incorporated in a polymeric material and **in that** it comprises at least one insert (1; 20; 50; 70; 80) according to any one of the previous claims.

27. Pedal crank (100; 200) according to claim 26, **characterised in that** said polymeric material of said composite material is substantially of the same type as the polymeric material of said insert (1; 20; 50; 70; 80).

28. Pedal crank (100; 200) according to claim 26, **characterised in that** it comprises a plurality of inserts (1; 20) arranged in the attachment zones of said pedal crank (100; 200) to a toothed crown of the bicycle.

29. Pedal crank (100; 200) according to claim 28, **characterised in that** the thickness (S1, S2) of said insert (1; 20; 50) has smaller sizes with respect to the thickness of the portion of pedal crank (100; 200) to which it is fastened.

30. Pedal crank (100; 200) according to claim 26, **characterised in that** said at least one insert (50; 80) is arranged in the zone of said pedal crank (100; 200) of attachment to the pin of the pedal of the bicycle.

31. Pedal crank (100; 200) according to claim 26, **characterised in that** said at least one insert (70) is arranged in the zone of said pedal crank (100; 200) of attachment to the bottom bracket of the bicycle.

32. Method for making an insert (1; 20; 50; 70; 80) according to claim 1, **characterised in that** it comprises the steps of:
- providing a shaped mould;
- providing said unidirectional structural fibres incorporated in a polymeric material in sheets;
- providing, in said mould, a plurality of piled up sheets so that the unidirectional structural fibres are orientated according to at least two distinct directions;
- subjecting the mould to a pressure and temperature profile such as to cause the setting of the polymeric material;
- removing the insert (1; 20; 50; 70; 80) from said mould.

33. Method according to claim 32, **characterised in that** said step of providing said unidirectional structural fibres incorporated in a polymeric material in sheets comprises the step of weaving said unidirectional fibres together incorporating them in a single sheet of fabric.

34. Method according to claim 32, **characterised in that** said step of arranging a plurality of piled up sheets in said mould takes place in an ordered manner, so as to form a structure containing unidirectional structural fibres orientated substantially in only two directions.

35. Method according to claim 32, **characterised in that** said step of arranging a plurality of piled up sheets in said mould provides for angularly staggering said sheets, so as to form a structure containing unidirectional structural fibres orientated in many directions.

36. Method according to claim 32, **characterised in that** it comprises a further step of making a hole (6; 56; 76; 86) on said insert (1; 20; 50; 70; 80).

37. Method according to claim 36, **characterised in that** said hole (6; 56; 76; 86) is made by suitably shaping said sheets before setting of the polymeric material.

38. Method according to claim 36, **characterised in that** said hole (6; 56; 76; 86) is made after removal of said insert (1; 20; 50; 70; 80) from said mould.

39. Method according to claim 32, **characterised in that** said mould is provided shaped according to the desired outer profile of said insert (1; 20; 50; 70; 80).

40. Method according to claim 32, **characterised in that** it comprises a further step of mechanical removal after setting of the polymeric material to shape the insert (1; 20; 50; 70; 80) according to the desired outer profile.

41. Method for making a pedal crank (100; 200) comprising a main body (102; 202) at least partially consisting of a composite material consisting of structural fibres incorporated in a polymeric material, **characterised in that** it comprises the steps of:
- providing a mould shaped according to the desired outer profile of the pedal crank (100; 200);
- providing, in at least one predetermined zone of said mould, at least one insert (1; 20; 50; 70; 80) formed from unidirectional structural fibres incorporated in a polymeric material, said unidirectional fibres being arranged such that they extend in at least two distinct directions, and having a fastening portion (4; 54; 74; 84) and a connection portion (2; 52; 72; 82);
- providing said composite material in the mould;
- subjecting said composite material to a temperature and pressure profile such as to allow it to be arranged in contact with the fastening portion (4; 54; 74; 84) of said at least one insert (1; 20; 50; 70; 80) and such as to cause the setting of the polymeric material;
- removing the pedal crank (100; 200) from the mould.

42. Method according to claim 41, **characterised in that** it comprises a further step of making a through hole (6; 56; 76; 86) in said connection portion (2; 52; 72; 82) of said insert (1; 20; 50; 70; 80).

## Patentansprüche

1. Einsatz (1; 20; 50; 70; 80) für eine Fahrradpedalkurbel (100; 200), wobei der Einsatz einen Verbindungsbereich (2; 52; 72; 82) zum Verbinden mit einer Komponente des Fahrrads und einen Befestigungsbereich (4; 54; 74; 84) zum Befestigen des Körpers der Pedalkurbel (100; 200) aufweist;
**dadurch gekennzeichnet, dass**
dieser mit unidirektionalen, strukturellen Fasern ausgebildet ist, die in einem Polymermaterial aufgenommen sind, wobei die unidirektionalen Fasern derart angeordnet sind, dass sie sich in wenigstens zwei verschiedenen Richtungen erstrecken.

2. Einsatz (1; 20; 50; 70; 80) nach Anspruch 1,
**dadurch gekennzeichnet, dass**
die unidirektionalen Fasern in wenigstens zwei verschiedenen Lagen aufgenommen sind, die jeweils Fasern enthalten, die in einer einzelnen Richtung ausgerichtet sind.

3. Einsatz (1; 20; 50; 70; 80) nach Anspruch 1,
**dadurch gekennzeichnet, dass**
die unidirektionalen Fasern miteinander verwoben und in einer einzelnen Gewebelage aufgenommen sind.

4. Einsatz (1;20; 50; 70; 80) nach Anspruch 3,
**dadurch gekennzeichnet, dass**
die unidirektionalen Fasern in zwei Richtungen ausgerichtet sind und Kette und Schuss der Gewebelage bilden.

5. Einsatz (1; 20; 50; 70; 80) nach Anspruch 2 oder 3,
**dadurch gekennzeichnet, dass**
dieser mehrere gestapelte Lagen aufweist.

6. Einsatz (1; 20; 50; 70; 80) nach Anspruch 5,
**dadurch gekennzeichnet, dass**
die Lagen zueinander versetzt gestapelt sind, so dass eine Struktur gebildet wird, die unidirektionale, strukturelle Fasern enthält, die in vielen Richtungen ausgerichtet sind.

7. Einsatz (1; 20; 50; 70; 80) nach Anspruch 5,
**dadurch gekennzeichnet, dass**
die Lagen in geordneter Weise gestapelt sind, so dass eine Struktur gebildet wird, die unidirektionale, strukturelle Fasern enthält, die im Wesentlichen in nur zwei Richtungen ausgerichtet sind.

8. Einsatz (1; 20; 50; 70; 80) nach Anspruch 7,
**dadurch gekennzeichnet, dass**
die beiden Richtungen im Wesentlichen einen rechten Winkel definieren.

9. Einsatz (1; 20; 50; 70; 80) nach Anspruch 4,
**dadurch gekennzeichnet, dass**
die unidirektionalen, strukturellen Fasern den gleichen prozentualen Gewichtsanteil von Ketten und Schüssen aufweisen.

10. Einsatz (1; 20; 50; 70; 80) nach Anspruch 1,
**dadurch gekennzeichnet, dass**
die unidirektionalen, strukturellen Fasern aus der Gruppe bestehend aus Kohlenstofffasern, Glasfasern, Aramidfasern, Borfasern, Keramikfasern und Kombinationen von diesen ausgewählt sind.

11. Einsatz (1; 20; 50; 70; 80) nach Anspruch 1,
**dadurch gekennzeichnet, dass**
das Polymermaterial ein wärmehärtendes Harz ist.

12. Einsatz (1; 20; 50; 70; 80) nach Anspruch 1,
**dadurch gekennzeichnet, dass**
das Polymermaterial ein thermoplastisches Harz ist.

13. Einsatz (1; 20; 50; 70; 80) nach Anspruch 1,
**dadurch gekennzeichnet, dass**
dieser eine im Wesentlichen längliche Form entlang einer Hauptachse (X-X) aufweist, wobei der Verbindungsbereich (2; 52) entlang der Hauptachse (X-X) an den Befestigungsbereich (4; 54) angrenzt.

14. Einsatz (1; 20; 50) nach Anspruch 13,
**dadurch gekennzeichnet, dass**
der Befestigungsbereich (4; 54) eine Länge (L2) aufweist, die größer oder gleich der Länge (L1) des Verbindungsbereiches (2; 52) ist.

15. Einsatz (1; 20) nach Anspruch 13,
**dadurch gekennzeichnet, dass**
der Befestigungsbereich (4) eine Dicke (S2) aufweist, die im Wesentlichen der Dicke (S1) des Verbindungsbereiches (2) entspricht.

16. Einsatz (1; 20; 50) nach Anspruch 13,
**dadurch gekennzeichnet, dass**
der Befestigungsbereich (4; 54) eine Breite (L2) aufweist, die kleiner als die Breite (L1) des Verbindungsbereiches (2; 52) ist.

17. Einsatz (50) nach Anspruch 13,
**dadurch gekennzeichnet, dass**
der Befestigungsbereich (54) eine Dicke (S2) aufweist, die geringer als die Dicke (S1) des Verbindungsbereiches (52) ist.

18. Einsatz (1; 20; 50) nach Anspruch 16 oder 17,
**dadurch gekennzeichnet, dass**
der Verbindungsbereich (2; 52) und der Befestigungsbereich (4; 54) durch eine Fläche (8, 9) mit einem kreisförmige Profil miteinander verbunden sind.

19. Einsatz (70; 80) nach Anspruch 1,
**dadurch gekennzeichnet, dass**
er einen Körper mit einer im Wesentlichen rohrförmigen Form aufweist, wobei der Verbindungsbereich (72; 82) innen an dem rohrförmigen Körper und der Befestigungsbereich (74; 84) außen an dem rohrförmigen Körper definiert ist.

20. Einsatz (1; 20; 50; 70; 80) nach Anspruch 1,
**dadurch gekennzeichnet, dass**
der Befestigungsbereich (4; 54; 74; 84) an der Außenumfangsfläche eine oder mehrere Vertiefungszonen (7, 7a, 7b; 77; 87) aufweist.

21. Einsatz (1; 20; 50; 70; 80) nach Anspruch 20,
**dadurch gekennzeichnet, dass**
sich die Vertiefungszonen (7a; 77; 87) über die gesamte Dicke (52; S3; S4) des Befestigungsbereiches (4; 54; 74; 84) erstrecken.

22. Einsatz (1; 20; 50; 70; 80) nach Anspruch 1,
**dadurch gekennzeichnet, dass**
der Befestigungsbereich (4; 54; 74; 84) Durchgangslöcher aufweist.

23. Einsatz (1; 20; 50; 70; 80) nach Anspruch 22,
**dadurch gekennzeichnet, dass**
sich die Durchgangslöcher entlang der Dicke (S2; S3; S4) des Befestigungsbereiches (4; 54; 74; 84) erstrecken.

24. Einsatz (1; 20; 50; 70; 80) nach Anspruch 1,
**dadurch gekennzeichnet, dass**
der Verbindungsbereich (2; 52; 72; 82) wenigstens ein Durchgangsloch (6; 56; 76; 86) aufweist.

25. Einsatz (50; 80) nach Anspruch 24,
**dadurch gekennzeichnet, dass**
wenigstens ein Durchgangsloch (56; 86) mit einem Gewinde versehen ist.

26. Pedalkurbel (100; 200) eines Fahrrades,
**dadurch gekennzeichnet,**
**dass** sie einen Hauptkörper (102; 202) aufweist, der wenigstens teilweise aus einem Verbundmaterial hergestellt ist, der aus strukturellen Fasern gebildet ist, die in einem Polymermaterial aufgenommen sind, und dass sie wenigstens einen Einsatz (1; 20; 50; 70; 80) nach einem der vorhergehenden Ansprüche umfasst.

27. Pedalkurbel (100; 200) nach Anspruch 26,
**dadurch gekennzeichnet, dass**
das Polymermaterial des Verbundmaterials im Wesentlichen dem Polymermaterial des Einsatzes (1; 20; 50; 70; 80) entspricht.

28. Pedalkurbel (100; 200) nach Anspruch 26,
**dadurch gekennzeichnet, dass**
sie mehrere Einsätze (1; 20) aufweist, die in den Befestigungszonen der Pedalkurbel (100; 200) an einem Zahnkranz des Fahrrades angeordnet sind.

29. Pedalkurbel (100; 200) nach Anspruch 28,
**dadurch gekennzeichnet, dass**
die Dicke (S1, S2) des Einsatzes (1; 20; 50) geringere Abmessungen in Bezug auf die Dicke des Bereiches der Pedalkurbel (100; 200) aufweist, an dem er befestigt ist.

30. Pedalkurbel (100; 200) nach Anspruch 26,
**dadurch gekennzeichnet, dass**
wenigstens ein Einsatz (50; 80) in der Zone der Pedalkurbel (100; 200) der Befestigung an dem Stift des Pedals des Fahrrades angeordnet ist.

31. Pedalkurbel (100; 200) nach Anspruch 26,
**dadurch gekennzeichnet, dass**
wenigstens ein Einsatz (70) in der Zone der Pedalkurbel (100; 200) der Befestigung des Tretlagers des Fahrrades angeordnet ist.

32. Verfahren zum Herstellen eines Einsatzes (1; 20; 50; 70; 80) nach Anspruch 1,
**dadurch gekennzeichnet, dass**
dieses die Schritte aufweist:
- Bereitstellen einer geformten Form;
- Bereitstellen der unidirektionalen, strukturellen Fasern, die in einem Polymermaterial aufgenommen sind, in Lagen;
- Anordnen mehrerer gestapelter Lagen in der Form derart, dass die unidirektionalen, strukturellen Fasern in wenigstens zwei verschiedenen Richtungen ausgerichtet sind;
- Anwenden eines Druck- und Temperaturprofils auf die Form, um das Polymermaterial auszuhärten,
- Entfernen des Einsatzes (1; 20; 50; 70; 80) aus der Form.

33. Verfahren nach Anspruch 32,
**dadurch gekennzeichnet, dass**
der Schritt des Bereitstellens der unidirektionalen, strukturellen, in einem Polymermaterial aufgenommenen Fasern in Lagen den Schritt des Verwebens der unidirektionalen Fasern in einer einzelnen Gewebelage umfasst.

34. Verfahren nach Anspruch 32,
**dadurch gekennzeichnet, dass**
der Schritt des Anordnens einer Mehrzahl von gestapelten Lagen in der Form in geordneter Art und Weise stattfindet, um eine Struktur zu erzeugen, die unidirektionale strukturelle Fasern enthält, die im Wesentlichen nur in zwei Richtungen ausgerichtet sind.

35. Verfahren nach Anspruch 32,
**dadurch gekennzeichnet, dass**
der Schritt des Anordnens einer Mehrzahl von gestapelten Lagen in der Form ein winkliges Versetzen der Lagen gewährleistet, um eine Struktur zu erzeugen, die unidirektionale strukturelle Fasern enthält, die in vielen Richtungen ausgerichtet sind.

36. Verfahren nach Anspruch 32,
**dadurch gekennzeichnet, dass**
es einen weiteren Schritt des Erzeugens eines Loches (6; 56; 76; 86) an dem Einsatz (1; 20; 50; 70; 80) umfasst.

37. Verfahren nach Anspruch 36,
**dadurch gekennzeichnet, dass**
das Loch (6; 56; 76; 86) ausgebildet wird, indem die Lagen vor dem Aushärten des Polymermaterials geeignet geformt werden.

38. Verfahren nach Anspruch 36,
**dadurch gekennzeichnet, dass**
das Loch (6; 56; 76; 86) nach dem Entfernen des Einsatzes (1; 20; 50; 70; 80) aus der Form ausgebildet wird.

39. Verfahren nach Anspruch 32,
**dadurch gekennzeichnet, dass**
die Form entsprechend dem gewünschten Außenprofil des Einsatzes (1; 20; 50; 70; 80) geformt bereitgestellt wird.

40. Verfahren nach Anspruch 32,
**dadurch gekennzeichnet, dass**
es einen weiteren Schritt des mechanischen Entfernens nach dem Aushärten des Polymermaterials umfasst, um den Einsatz (1; 20; 50; 70; 80) entsprechend dem gewünschten Außenprofil zu formen.

41. Verfahren zum Herstellen einer Pedalkurbel (100; 200) mit einem Hauptkörper (102; 202), der zumindest teilweise aus einem Verbundmaterial hergestellt ist, das aus strukturellen Fasern ausgebildet ist, die in einem Polymermaterial aufgenommen sind,
**dadurch gekennzeichnet, dass**
es die Schritte aufweist:
Bereitstellen einer Form, die entsprechend dem gewünschten Außenprofil der Pedalkurbel (100; 200) geformt ist;
Vorsehen in zumindest einer vorbestimmten Zone der Form wenigstens eines Einsatzes (1; 20; 50; 70; 80), der aus unidirektionalen, strukturellen Fasern ausgebildet ist, die in einem Polymermaterial aufgenommen sind, wobei die unidirektionalen Fasern derart angeordnet sind, dass sie sich in wenigstens zwei verschiedenen Richtungen erstrecken, und der einen Befestigungsbereich (4; 54; 74; 84) und einen Verbindungsbereich (2; 52; 72; 82) aufweist;
Anordnen des Verbundmaterials in der Form;
Anwenden eines Temperatur- und Druckprofils auf das Verbundmaterial derart, dass dieses in Kontakt mit dem Befestigungsbereich (4; 54; 74; 84) des wenigstens einen Einsatzes (1; 20; 50; 70, 80) angeordnet werden kann und dass das Aushärten des Polymermaterials bewirkt wird;
Entfernen der Pedalkurbel (100; 200) aus der Form.

42. Verfahren nach Anspruch 41,
**dadurch gekennzeichnet, dass**
es einen weiteren Schritt des Erzeugens eines Durchgangsloches (6; 56; 76; 86) in dem Verbindungsbereich (2; 52; 72; 82) des Einsatzes (1; 20; 50; 70; 80) umfasst.

## Revendications

1. Insert (1 ; 20 ; 50 ; 70 ; 80) pour une manivelle de pédale (100 ; 200) de bicyclette, l'insert ayant une partie de raccordement (2 ; 52 ; 72 ; 82) pour se raccorder à un composant de la bicyclette et une partie de fixation (4 ; 54 ; 74 ; 84) pour la fixation au corps de la manivelle de pédale (100 ; 200) ; **caractérisé en ce qu'**il est réalisé avec des fibres structurelles unidirectionnelles insérées dans un matériau polymère, lesdites fibres unidirectionnelles étant agencées de sorte qu'elles s'étendent dans au moins deux directions distinctes.

2. Insert (1 ; 20 ; 50 ; 70 ; 80) selon la revendication 1, **caractérisé en ce que** lesdites fibres unidirectionnelles sont incorporées dans au moins deux feuilles distinctes, chacune contenant des fibres orientées dans une seule direction.

3. Insert (1 ; 20 ; 50 ; 70 ; 80) selon la revendication 1, **caractérisé en ce que** lesdites fibres unidirectionnelles sont tissées ensemble et sont incorporées dans une seule feuille de tissu.

4. Insert (1 ; 20 ; 50 ; 70 ; 80) selon la revendication 3, **caractérisé en ce que** lesdites fibres unidirectionnelles sont orientées dans deux directions et constituent la chaîne et la trame de ladite feuille de tissu.

5. Insert (1 ; 20 ; 50 ; 70 ; 80) selon la revendication 2 ou 3, **caractérisé en ce qu'**il comprend une pluralité de feuilles empilées.

6. Insert (1 ; 20 ; 50 ; 70 ; 80) selon la revendication 5, **caractérisé en ce que** lesdites feuilles sont empilées en décalage, afin de former une structure contenant des fibres structurelles unidirectionnelles orientées dans plusieurs directions.

7. Insert (1 ; 20 ; 50 ; 70 ; 80) selon la revendication 5, **caractérisé en ce que** lesdites feuilles sont empilées d'une manière ordonnée, afin de former une structure contenant des fibres structurelles unidirectionnelles orientées sensiblement uniquement dans deux directions.

8. Insert (1 ; 20 ; 50 ; 70 ; 80) selon la revendication 7, **caractérisé en ce que** lesdites deux directions définissent sensiblement un angle droit.

9. Insert (1 ; 20 ; 50 ; 70 ; 80) selon la revendication 4, **caractérisé en ce que** lesdites fibres structurelles unidirectionnelles ont le même pourcentage de poids de chaîne et de trame.

10. Insert (1; 20 ; 50 ; 70 ; 80) selon la revendication 1, **caractérisé en ce que** lesdites fibres structurelles unidirectionnelles sont choisies dans un groupe comprenant les fibres de carbone, les fibres de verre, les fibres d'aramide, les fibres de bore, les fibres de céramique et leurs combinaisons.

11. Insert (1 ; 20 ; 50 ; 70 ; 80) selon la revendication 1, **caractérisé en ce que** ledit matériau polymère est une résine thermodurcissable.

12. Insert (1 ; 20 ; 50 ; 70 ; 80) selon la revendication 1, **caractérisé en ce que** ledit matériau polymère est une résine thermoplastique.

13. Insert (1 ; 20; 50) selon la revendication 1, **caractérisé en ce qu'**il a une forme sensiblement allongée le long d'un axe principal (X-X) dans lequel ladite partie de raccordement (2 ; 52) est contiguë à ladite partie de fixation (4; 54) le long dudit axe principal (X-X).

14. Insert (1; 20 ; 50) selon la revendication 13, **caractérisé en ce que** ladite partie de fixation (4; 54) a une longueur (L2) supérieure ou égale à la longueur (L1) de ladite partie de raccordement (2; 52).

15. insert (1; 20) selon la revendication 13, **caractérisé en ce que** ladite partie de fixation (4) a une épaisseur (S2) sensiblement identique à l'épaisseur (S1) ou de ladite partie de raccordement (2).

16. Insert (1 ; 20; 50) selon la revendication 13, **caractérisé en ce que** ladite partie de fixation (4 ; 54) a une largeur (L2) inférieure à la largeur (L1) de ladite partie de raccordement (2; 52).

17. Insert (50) selon la revendication 13, **caractérisé en ce que** ladite partie de fixation (54) a une épaisseur (S2) inférieure à l'épaisseur (S1) de ladite partie de raccordement (52).

18. Insert (1 ; 20 ; 50) selon la revendication 16 ou 17, **caractérisé en ce que** ladite partie de raccordement (2 ; 52) et ladite partie de fixation (4 ; 54) sont raccordées par le biais d'une surface (8, 9) avec un profil circulaire.

19. Insert (70 ; 80) selon la revendication 1, **caractérisé en ce qu'**il a un corps sensiblement de forme tubulaire, ladite partie de raccordement (72 ; 82) étant définie de manière intérieure sur ledit corps tubulaire et ladite partie de fixation (74 ; 84) étant définie de manière extérieure sur ledit corps tubulaire.

20. Insert (1 ; 20 ; 50 ; 70 ; 80) selon la revendication 1, **caractérisé en ce que** ladite partie de fixation (4 ; 54 ; 74 ; 84) comprend, sur la surface périphérique externe, une ou plusieurs zones de dépression (7, 7a, 7b; 77 ; 87).

21. Insert (1 ; 20 ; 50 ; 70 ; 80) selon la revendication 20, **caractérisé en ce que** lesdites zones de dépression (7a; 77 ; 87) s'étendent sur toute l'épaisseur (S2 ; S3; S4) de ladite partie de fixation (4 ; 54 ; 74; 84).

22. Insert (1; 20 ; 50 ; 70; 80) selon la revendication 1, **caractérisé en ce que** ladite partie de fixation (4; 54 ; 74; 84) a des trous de passage.

23. Insert (1 ; 20 ; 50 ; 70; 80) selon la revendication 22, **caractérisé en ce que** desdits trous de passage s'étendent le long de l'épaisseur (S2 ; S3 ; S4) de ladite partie de fixation (4; 54; 74 ; 84).

24. Insert (1 ; 20 ; 50 ; 70 ; 80) selon la revendication 1, **caractérisé en ce que** ladite partie de raccordement (2 ; 52 ; 72 ; 82) a au moins un trou de passage (6 ; 56 ; 76 ; 86).

25. Insert (50 ; 80) selon la revendication 24, **caractérisé en ce que** ledit au moins un trou de passage (56 ; 86) est fileté.

26. Manivelle de pédale (100 ; 200) d'une bicyclette, **caractérisée en ce qu'**elle comprend un corps principal (102 ; 202) se composant au moins partiellement d'un matériau composite se composant de fibres structurelles incorporées dans un matériau polymère et **en ce qu'**elle comprend au moins un insert (1 ; 20 ; 50 ; 70 ; 80) selon l'une quelconque des revendications précédentes.

27. Manivelle de pédale (100 ; 200) selon la revendication 26, **caractérisée en ce que** le matériau polymère dudit matériau composite est sensiblement du même type que le matériau polymère dudit insert (1; 20 ; 50 ; 70 ; 80).

28. Manivelle de pédale (100 ; 200) selon la revendication 26, **caractérisée en ce qu'**elle comprend une pluralité d'inserts (1 ; 20) agencés dans les zones de fixation de ladite manivelle de pédale (100; 200) à une couronne dentée de la bicyclette.

29. Manivelle de pédale (100 ; 200) selon la revendication 28, **caractérisée en ce que** l'épaisseur (S1, S2) dudit insert (1 ; 20 ; 50) a de plus petites tailles par rapport à l'épaisseur de la partie de manivelle de pédale (100; 200) sur laquelle il est fixé.

30. Manivelle de pédale (100 ; 200) selon la revendication 26, **caractérisée en ce que** ledit au moins un insert (50 ; 80) est agencé dans la zone de ladite manivelle de pédale (100 ; 200) de la fixation à la broche de la pédale de la bicyclette.

31. Manivelle de pédale (100 ; 200) selon la revendication 26, **caractérisée en ce qu'**au moins un insert (70) est agencé dans la zone de ladite manivelle de pédale (100 ; 200) de la fixation sur le braquet inférieur de la bicyclette.

32. Procédé pour fabriquer un insert (1 ; 20 ; 50 ; 70 ; 80) selon la revendication 1, **caractérisé en ce qu'**il comprend les étapes consistant à
- prévoir un moule formé ;
- prévoir desdites fibres structurelles unidirectionnelles incorporées dans un matériau polymère en feuilles ;
- prévoir, dans ledit moule, une pluralité de feuilles empilées de sorte que les fibres structurelles unidirectionnelles sont orientées selon les au moins deux directions distinctes ;
- soumettre le moule à un profil de pression et de température afin de provoquer le durcissement du matériau polymère ;
- retirer l'insert (1 ; 20 ; 50; 70 ; 80) desdits moules.

33. Procédé selon la revendication 32, **caractérisé en ce que** ladite étape consistant à prévoir lesdites fibres structurelles unidirectionnelles incorporées dans un matériau polymère en feuilles comprend l'étape consistant à tisser les lesdites fibres unidirectionnelles ensemble en les incorporant dans une seule feuille de tissu.

34. Procédé selon la revendication 32, **caractérisé en ce que** l'étape consistant à agencer une pluralité de feuilles empilées dans ledit moule, a lieu selon une manière ordonnée, afin de former une structure comprenant des fibres structurelles unidirectionnelles orientées sensiblement uniquement dans deux directions.

35. Procédé selon la revendication 32, **caractérisé en ce que** ladite étape consistant à agencer une pluralité de feuilles empilées dans ledit moule propose le décalage angulaire desdites feuilles, afin de former une structure contenant les fibres structurelles unidirectionnelles orientées dans de nombreuses directions

36. Procédé selon la revendication 32, **caractérisé en ce qu'**il comprend une autre étape consistant à réaliser un trou (6 ; 56 ; 76; 86) sur ledit insert (1; 20; 50 ; 70 ; 80).

37. Procédé selon la revendication 36, **caractérisé en ce que** ledit trou (6; 56 ; 76; 86) est réalisé en formant sensiblement lesdites feuilles avant le durcissement du matériau polymère.

38. Procédé selon la revendication 36, **caractérisé en ce que** ledit trou (6; 56 ; 76 ; 86) est réalisé après le retrait dudit insert (1; 20 ; 50 ; 70 ; 80) dudit moule.

39. Procédé selon la revendication 32, **caractérisé en ce que** ledit moule est formé selon le profil externe souhaité dudit insert (1; 20 ; 50; 70 ; 80).

40. Procédé selon la revendication 32, **caractérisé en ce qu'**il comprend une étape supplémentaire de retrait mécanique après le durcissement du matériau polymère pour former l'insert (1; 20 ; 50 ; 70 ; 80) selon le profil externe souhaité.

41. Procédé pour fabriquer une manivelle de pédale (100 ; 200) comprenant un corps principal (102; 202) se composant au moins partiellement d'un matériau composite comprenant des fibres structurelles incorporées dans un matériau polymère, **caractérisé en ce qu'**il comprend les étapes consistant à :
- prévoir un moule formé selon le profil externe souhaité de la manivelle de pédale (100 ; 200) ;
- prévoir, au moins dans une zone prédéterminée dudit moule, au moins un insert (1 ; 20 ; 50; 70 ; 80) formé à partir de fibres structurelles unidirectionnelles incorporées dans un matériau polymère, lesdites fibres unidirectionnelles étant agencées de sorte qu'elles s'étendent dans au moins deux directions distinctes et ayant une partie de fixation (4 ; 54 ; 74 ; 84) et une partie de raccordement (2 ; 52 ; 72; 82);
- prévoir ledit matériau composite dans le moule;
- soumettre ledit matériau composite à un profil de température et de pression de sorte qu'il lui permet d'être agencé en contact avec la partie de fixation (4 ; 54 ; 74 ; 84) dudit au moins un insert (1; 20 ; 50 ; 70; 80) et afin de provoquer le durcissement du matériau polymère ;
- retirer la manivelle de pédale (100 ; 200) du moule.

42. Procédé selon la revendication 41, **caractérisé en ce qu'**il comprend une autre étape consistant à réaliser un trou de passage (6; 56; 76; 86) dans ladite partie de raccordement (2 ; 52 ; 72 ; 82) dudit insert (1; 20; 50; 70 ; 80).
